# EUROPEAN PATENT APPLICATION

(11) **EP 3 470 938 A1**
(43) Date of publication of application: **17.04.2019**
(21) Application number: 17905859.9
(22) Date of filing: 20.12.2017
(51) Int. Cl.: G05B 15/02, H04L 29/08

(54) **SMART CONTROL METHOD AND SERVER FOR MULTIPLE DEVICES**

(30) Priority: 13.04.2017 CN 201710243666
(71) Applicant: Shenzhen Skyworth-RGB Electronic Co., Ltd., Shenzhen, Guangdong 518057 (CN)
(72) Inventor: DING, Zhilin, Shenzhen Guangdong 518057 (CN)
(74) Representative: Osterhoff, Utz
(86) International application number: PCT/CN2017/117578
(87) International publication number: WO 2018/188372

(57) **Abstract**

Disclosed is a multi-device intelligent control method, including: in response to receiving running parameter information sent by a first client, analyzing, by a server, the running parameter information to obtain state change information; acquiring scene data corresponding to the state change information, and analyzing the scene data to obtain identification information of a second device corresponding to the scene data, a second client corresponding to the second device, and corresponding parameter change information of the second device; and sending the parameter change information to the second client, such that the second client controls the second device based on the parameter change information. Further disclosed is a server. Thus, the corresponding second device can be controlled by way of the running parameter information, achieving linked control between devices of different manufacturers, enabling the user to control the devices of other manufactures through the application of a certain device.

## Description

### FIELD

The present disclosure relates to the technical field of intelligent control, and more particularly relates to a multi-device intelligent control method and a server.

### BACKGROUND

With the rapid development of Internet of Things (loT) technology, smart home, as an important part of the loT, has found increasingly widespread applications. Each company would provide an APP that controls the company's smart home devices to communicate with each other and that controls these smart home devices to communicate with the smart home devices of a partner company.

Because the APPs of different companies use different communication protocols, these APPs cannot communicate with one another. As such, a user can only control the corresponding smart home devices through his/her respective APP, and the communication between the smart home devices of different companies cannot be realized, thus affecting the user's experience.

### SUMMARY

The present disclosure therefore provides a multi-device intelligent control method and a server, intending to solve the technical problem that currently communication between smart home devices of different companies cannot be realized.

To achieve the above object, this disclosure provides a multi-device intelligent control method that includes the following operations:
in response to receiving running parameter information sent by a first client, analyzing, by a server, the running parameter information to obtain state change information, where when a state of a first device corresponding to the first client changes, the first client generates the running parameter information based on the state change information of the first device and further sends the running parameter information to the server;
acquiring scene data corresponding to the state change information, and analyzing the scene data to obtain identification information of a second device that corresponds to the scene data, a second client corresponding to the second device, and parameter change information; and
sending the parameter change information to the second client, such that the second client controls the second device based on the parameter change information.

In some embodiments, the block of "acquiring scene data corresponding to the state change information" includes the following operations:
sending, by the server, the state change information to a cloud server, such that the cloud server searches in a scene database for the scene data corresponding to the state change information, and transmits the found scene data to the server.

In some embodiments, the multi-device intelligent control method further includes the following operations prior to the block of "in response to receiving running parameter information sent by a first client, analyzing, by a server, the running parameter information to obtain state change information":
creating an aidl file in a specified directory, and reconstructing an onBind method by customizing a class MySceneSevice; and
adding respective start functions of applications of clients in a manifest file.

In some embodiments, the block of "sending the parameter change information to the second client, such that the second client controls the second device based on the parameter change information" includes the following operations:
sending a start instruction to the second client, such that the second client, in response to receiving the start instruction, starts an application corresponding to the parameter change information, and returns operating state information of the application to the server; and
in response to receiving the operating state information, sending the parameter change information to the second client, allowing the second client to control the second device through the application based on the parameter change information.

In some embodiments, the running parameter information includes current state information of the first device, and changed data information of the first device when the state of the first device changes.

In addition, in order to achieve the above object, the disclosure further provides a server that includes:
an analysis module, configured to, in response to receiving running parameter information sent by a first client, analyzing the running parameter information to obtain state change information, where when a state of a first device corresponding to the first client changes, the first client generates the running parameter information based on the state change information of the first device and further sends the running parameter information to the server;
an acquisition module, configured to acquirescene data corresponding to the state change information, and analyze the scene data to obtain identification information of a second device that corresponds to the scene data, a second client corresponding to the second device, and parameter change information; and
a transmission module, configured to send the parameter change information to the second client, such that the second client controls the second device based on the parameter change information.

In some embodiments, the acquisition module is further configured to send the state change information to a cloud server, such that the cloud server searches in a scene database for the scene data corresponding to the state change information, and transmits the acquired scene data to the server.

In some embodiments, the server further includes:
a creation module, configured to create an aidl file in a specified directory, and reconstruct an onBind method by customizing a class MySceneSevice; and
an addition module configured to add respective start functions of applications of clients in a manifest file.

In some embodiments, the transmission module includes:
a first transmission unit, configured to send a start instruction to the second client, such that the second client, in response to receiving the start instruction, starts an application corresponding to the parameter change information, and returns operating state information of the application to the server; and
a second transmission unit, configured to send the parameter change information to the second client in response to receiving the operating state information, allowing the second client to control the second device through the application based on the parameter change information.

In some embodiments, the running parameter information includes current state information of the first device, and changed data information of the first device when the state of the first device changes.

According to this disclosure, in response to receiving the running parameter information sent by a first client, a server analyzes the running parameter information to obtain state change information. Then the server acquires the scene data corresponding to the state change information and further analyzes the scene data to obtain identification information of a second device corresponding to the scene data, a second client corresponding to the second device, and parameter change information. Then the server sends the parameter change information to the second client so that the second client controls the second device based on the parameter change information. This makes it possible to control the corresponding second device by way of the running parameter information, enabling linked control between devices of different manufacturers. Therefore, the user would be able to control the devices of other manufacturers by way of an application of a certain device, realizing the linkage of various devices in an intelligent scenario without changing the hardware and communication protocols of these devices, which greatly enhances the experience of smart home.

### BRIEF DESCRIPTION OF THE DRAWINGS

FIG. 1 is a flowchart illustrating a first embodiment of a multi-device intelligent control method in accordance with the present disclosure.
FIG. 2 is a flowchart illustrating a second embodiment of the multi-device intelligent control method in accordance with the present disclosure.
FIG. 3 is a detailed flowchart illustrating the block of "sending the parameter change information to the second client" in a third embodiment of the multi-device intelligent control method in accordance with the present disclosure.
FIG. 4 is a block diagram illustrating a first embodiment of a server in accordance with the present disclosure.

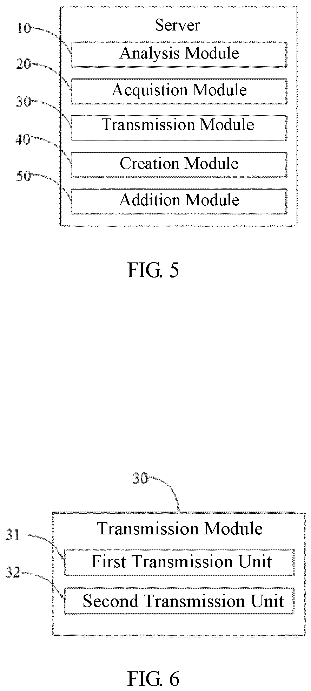

FIG. 5 is a block diagram illustrating a second embodiment of a server in accordance with the present disclosure.
FIG. 6 is a detailed block diagram illustrating a transmission module in a third embodiment of the server in accordance with the present disclosure.

Various implementations for achieving the objects, functional features, and advantages of this disclosure will now be described in further detail in connection with embodiments and the accompanying drawings.

### DETAILED DESCRIPTION OF THE EMBODIMENTS

It will be appreciated that the specific embodiments described herein are merely illustrative of the present disclosure and are not intended to limit the disclosure.

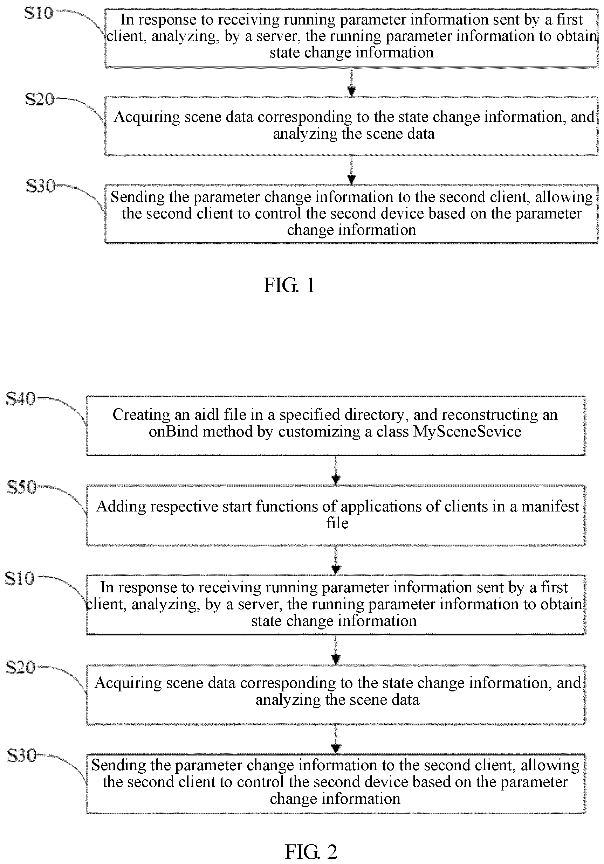

This disclosure provides a multi-device intelligent control method. Referring to FIG. 1, there is shown a flowchart illustrating a first embodiment of a multi-device intelligent control method in accordance with the present disclosure.

In this embodiment, the multi-device intelligent control method includes the following blocks S10 to S30.

In S10, the method includes: in response to receiving running parameter information sent by a first client, analyzing, by a server, the running parameter information to obtain state change information, where when a state of a first device corresponding to the first client changes, the first client generates the running parameter information based on the state change information of the first device and further sends the running parameter information to the server.

In this embodiment, before block S10, the server may automatically create an IScene.java file named IScene.aidl in the same directory as the R file under the root directory. The server may then define a class MySceneSevice that inherits from Service, and reconstruct the onBind method based on the class MySceneSevice, so that the objects (arguments) of the two methods in IScene.Stub() can be returned to the client by way of the onBind(Intent intent) method. The server may then register a service class in the manifest file and further add the respective start functions (i.e., specific start actions) of the applications of various clients, so that the clients will be bound to this server thus enabling the server to start the applications of these clients. Each client that communicates with the server needs to copy the IScene.aidl file to the same directory as the server's IScene.aidl file, and then bind the server application by calling the bindService (intent, connect, Service.BIND_AUTO_CREATE) method, and obtain the IBinder object provided by the server. The definition of the IScene.aidl method is as follows:
String updateData();
Void changeMessage(String message).

After the binding between the clients and the server is implemented, when the state of the device corresponding to a client changes, this client would generate a message, that is, the running parameter information, based on the states of the device change (including the pre-change state and the post-change state), the size of the changed data, and the changed value, etc. More specifically, the client may generate a message string in a preset format, and then establish a communication connection with the server, and pass the message to the server by calling the changeMessage(String message) method through the obtained object IBinder provided by the server.

In this embodiment, when receiving the running parameter information sent by the first client, the server would analyze the running parameter information to obtain the state change information of the first device. The first device may include a refrigerator, an air conditioner, a washing machine, a television, a rice cooker, a water heater, and so on. The running parameter information may include current state information of the first device and data information that changes when the state of the first device changes. The multi-device intelligent control method then proceeds to block S20.

In S20, the method includes: acquiring scene data corresponding to the state change information, and analyzing the scene data to obtain identification information of a second device that corresponds to the scene data, a second client corresponding to the second device, and parameter change information.

In this embodiment, when obtaining the state change information of the first device, the server would first acquire the scene data corresponding to the state change information. Specifically, the server or the database may store the preset scene data corresponding to the state change information of different devices. Thus, when the state change information of the first device is obtained, the state change information can be based on to search the preset scene data of the server or the database for the corresponding scene data. Alternatively, the preset scene data corresponding to the state change information of different devices may be stored in a cloud server or in a database connected to the cloud server. Accordingly, when obtaining the state change information of the first device, the server may send this state change information to the cloud server, which may then search the preset scene data for the scene data that corresponds to the state change information and further send the found scene data to the server. That is, in this embodiment, block S20 includes: sending, by the server, the state change information to a cloud server, so that the cloud server searches the scene database for the scene data corresponding to the state change information, and further sends the above-described scene data to the server.

In this embodiment, when it acquires the scene data, the server would analyze the scene data to obtain the identification information of a second device corresponding to the scene data, a second client corresponding to the second device, and parameter change information. That is, the scene data is analyzed to obtain the identification information of the device associated with the first device (i.e., the second device), the second client corresponding to the second device, as well as the corresponding parameter change information of the second device, and so on. The parameter change information refers to an action that the second device needs to perform and the data corresponding to the action. The second terminal may be the same as the first terminal, that is, the corresponding APP of the first device and the corresponding APP of the second device may be installed on the same terminal. The multi-device intelligent control method then continues to block S30.

In S30, the multi-device intelligent control method includes: sending the parameter change information to the second client, such that the second client controls the second device based on the parameter change information.

In this embodiment, when obtaining the identification information of the second device, the second client corresponding to the second device, and the corresponding parameter change information of the second device, the server may send the parameter change information together with the identification information of the second device to the second client. Then in response to receiving the parameter change information and the identification information of the second device, the second client may control the second device according to the parameter change information, thereby realizing linked control between devices of different companies. This allows the user to automatically adjust another device associated with any device the user is currently adjusting.

For example, assume the first device is a gas stove while the second device is a range hood. Then if the user needs to use the gas stove to cook, when the gas stove is turned on, the first client corresponding to the gas stove would simultaneously receive the state change information of the gas stove, and further generate the running parameter information based on the state change information and send the running parameter information to the server. Then the server would analyze the received running parameter information to obtain the state change information and further acquire the scene data corresponding to the state change information. The server would then analyze the scene data to obtain the identification information of the second device corresponding to the scene data, the second client corresponding to the second device, as well as the parameter change information, namely the identification information of the range hood and the second client corresponding to the range hood as well as the parameter change information for starting. Thereafter, the server would send the parameter change information to the second client, and in response to receiving the parameter change information, the second client would control the range hood to start up. Thereby, the linked control between the devices of different companies is achieved. Of course, the above method can also be applied to other scenarios. For example, when the user turns on the television in the living room, the air conditioner in the living room can be automatically turned on. As another example, when the user turns on the television in the bedroom, the air conditioner in the bedroom can be automatically turned on. As still another example, when the user turns off the light in the bedroom, the air conditioner in the bedroom can be adjusted to sleep mode, etc., thereby greatly improving the user experience.

According to the multi-device intelligent control method provided in this embodiment, in response to receiving the running parameter information sent by a first client, a server analyzes the running parameter information to obtain state change information. Then the server acquires the scene data corresponding to the state change information and further analyzes the scene data to obtain identification information of a second device corresponding to the scene data, a second client corresponding to the second device, and parameter change information. Then the server sends the parameter change information to the second client so that the second client controls the second device based on the parameter change information. This makes it possible to control the corresponding second device by way of the running parameter information, enabling linked control between devices of different manufacturers. Therefore, the user would be able to control the devices of other manufacturers by way of an application of a certain device, realizing the linkage of various devices in an intelligent scenario without changing the hardware and communication protocols of these devices, which greatly enhances the experience of smart home.

A second embodiment of the multi-device intelligent control method in accordance with the present disclosure is provided on the basis of the first embodiment, as illustrated in FIG. 2. In this embodiment,

In block S40, the multi-device intelligent control method includes: creating an aidl file in a specified directory, and reconstructing an onBind method by customizing a class MySceneSevice.

In this embodiment, the server may automatically create an IScene.java file named IScene.aidl in the same directory as the directory of the R file under the root directory. That is, the specified directory is the directory of the R file under the root directory of the server. The server may then define a class MySceneSevice that inherits from Service, and reconstruct the onBind method based on the class MySceneSevice, so that the objects (arguments) of the two methods in IScene.Stub() can be returned to the client by way of the onBind(Intent intent) method. The definition of the IScene.aidl method is as follows:
String updateData();
Void changeMessage(String message).

In block S50, the multi-device intelligent control method includes: adding respective start functions of applications of clients in a manifest file.

In this embodiment, the server may first register a service class in the manifest file and at the same time add the respective start functions (i.e., specific start actions) of the applications of various clients, so that the clients will be bound to this server thus enabling the server to start the applications of these clients. Each client that communicates with the server needs to copy the IScene.aidl file to the same directory as the server's IScene.aidl file, and then bind the server application by calling the bindService(intent, connect, Service.BIND_AUTO_CREATE) method, and obtain the IBinder object provided by the server.

According to the multi-device intelligent control method provided in this embodiment, an aidl file is created in a specified directory, and an onBind method is reconstructed by customizing a class MySceneSevice, and then the respective start functions of the applications of the clients are added in a manifest file. This enables the server to automatically start the applications of various clients to facilitate the communication with the clients, whereby the clients can control the corresponding devices facilitating the linked control of various devices found in an intelligent scenario.

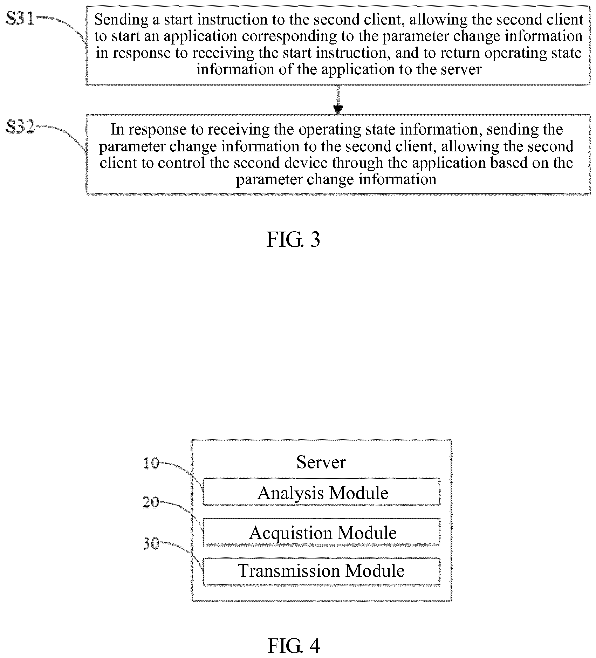

A third embodiment of the multi-device intelligent control method in accordance with the present disclosure is provided on the basis of the second embodiment, as illustrated in FIG. 3. In this embodiment, block S30 includes the following operations S31 and S32.

In S31, the block includes: sending a start instruction to the second client, such that the second client, in response to receiving the start instruction, starts an application corresponding to the parameter change information, and returns operating state information of the application to the server.

Generally, the application of the second device in the second client stays in a closed state to reduce the power consumption of the second terminal. Therefore, the server may first determine whether the application of the second device is in a running state. When the application of the second device is not running, then a start instruction would be transmitted to the second client. Then in response to receiving the start instruction, the second client would activate the application corresponding to the parameter change information.

In this embodiment, the start instruction can be directly sent to the second client, so that when the application corresponding to the parameter change information is not running, the second client would activate the application corresponding to the parameter change information according to this start instruction and further send the operating state information of the application to the server. Then when the application corresponding to the parameter change information is in the running state, the second client would send the operating state information of the application to the server, where the operating state information refers to the operating state information when the application is in the running state. After the application is activated, the second client is then connected to the server via this application so as to establish a communication connection between the second client and the server and further notify the server that the application is already running.

In S32, the block includes: in response to receiving the operating state information, sending the parameter change information to the second client, allowing the second client to control the second device through the application based on the parameter change information.

In this embodiment, at the time of receiving the operating state information, the application of the second client has already been started and the communication connection between the second client and the server has been successfully established. Thus, the server can send the parameter change information to the second client, which then can control the second device via this application based on the parameter change information. When the communication connection is being set up between the second client and the server, the second client obtains the association data, that is, the parameter change information, transmitted by the server through the updateData() method of the IBinder object acquired from the server.

According to the multi-device intelligent control method provided by this embodiment, a start instruction is sent to the second client, so that the second client starts the application corresponding to the parameter change information in response to receiving the start instruction, and further returns the operating state information of the application to the server. Then when receiving the operating state information, the server sends the parameter change information to the second client, which thus controls the second device via the application based on the parameter change information, thereby ensuring that the application of the second client is in an operating state. Thus, the second client can control the second device through the application, thereby realizing linked control between devices of different manufacturers, enabling the user to control devices of other manufacturers through the application of a certain device.

This disclosure further provides a server. Referring now to FIG. 4, there is shown a block diagram illustrating a first embodiment of a server in accordance with the present disclosure.

In this embodiment, the server includes an analysis module 10, an acquisition module 20, and a transmission module 30.

The analysis module 10 is configured to, in response to receiving running parameter information sent by a first client, analyzing the running parameter information to obtain state change information, where when a state of a first device corresponding to the first client changes, the first client generates the running parameter information based on the state change information of the first device and further sends the running parameter information to the server.

In this embodiment, the server may automatically create an IScene.java file named IScene.aidl in the same directory as the R file under the root directory. The server may then define a class MySceneSevice that inherits from Service, and reconstruct the onBind method based on the class MySceneSevice, so that the objects (arguments) of the two methods in IScene.Stub() can be returned to the client by way of the onBind(Intent intent) method. The server may then register a service class in the manifest file and further add the respective start functions (i.e., specific start actions) of the applications of various clients, so that the clients will be bound to this server thus enabling the server to start the applications of these clients. Each client that communicates with the server needs to copy the IScene.aidl file to the same directory as the server's IScene.aidl file, and then bind the server application by calling the bindService(intent, connect, Service.BIND_AUTO_CREATE) method, and obtain the IBinder object provided by the server. The definition of the IScene.aidl method is as follows:
String updateData();
Void changeMessage(String message).

After the binding between the clients and the server is implemented, when the state of the device corresponding to a client changes, this client would generate a message, that is, the running parameter information, based on the states of the device change (including the pre-change state and the post-change state), the size of the changed data, and the changed value, etc. More specifically, the client may generate a message string in a preset format, and then establish a communication connection with the server, and pass the message to the server by calling the changeMessage(String message) method through the obtained object IBinder provided by the server.

In this embodiment, when receiving the running parameter information sent by the first client, the analysis module 10 would analyze the running parameter information to obtain the state change information of the first device. The first device may include a refrigerator, an air conditioner, a washing machine, a television, a rice cooker, a water heater, and so on. The running parameter information may include current state information of the first device and data information that changes when the state of the first device changes.

The acquisition module 20 is configured to acquirescene data corresponding to the state change information, and analyze the scene data to obtain identification information of a second device that corresponds to the scene data, a second client corresponding to the second device, and parameter change information.

In this embodiment, when obtaining the state change information of the first device, the acquisition module 20 would first acquire the scene data corresponding to the state change information. Specifically, the server or the database may store the preset scene data corresponding to the state change information of different devices. Thus, when the state change information of the first device is obtained, the state change information can be based on to search the preset scene data of the server or the database for the corresponding scene data. Alternatively, the preset scene data corresponding to the state change information of different devices may be stored in a cloud server or in a database connected to the cloud server. Accordingly, when obtaining the state change information of the first device, the server may send this state change information to the cloud server, which may then search the preset scene data for the scene data that corresponds to the state change information and further send the found scene data to the server. That is, in this embodiment, the acquisition module 20 is further configured to perform the following operations: sending, by the server, the state change information to a cloud server, so that the cloud server searches the scene database for the scene data corresponding to the state change information, and further sends the above-described scene data to the server.

In this embodiment, when it acquires the scene data, the acquisition module 20 would analyze the scene data to obtain the identification information of a second device corresponding to the scene data, a second client corresponding to the second device, and parameter change information. That is, the scene data is analyzed to obtain the identification information of the device associated with the first device (i.e., the second device), the second client corresponding to the second device, as well as the corresponding parameter change information of the second device, and so on. The parameter change information refers to an action that the second device needs to perform and the data corresponding to the action. The second terminal may be the same as the first terminal, that is, the corresponding APP of the first device and the corresponding APP of the second device may be installed on the same terminal.

The transmission module 30 is configured to send the parameter change information to the second client, such that the second client controls the second device based on the parameter change information.

In this embodiment, when obtaining the identification information of the second device, the second client corresponding to the second device, and the corresponding parameter change information of the second device, the transmission module 30 may send the parameter change information together with the identification information of the second device to the second client. Then in response to receiving the parameter change information and the identification information of the second device, the second client may control the second device according to the parameter change information, thereby realizing linked control between devices of different companies. This allows the user to automatically adjust another device associated with any device the user is currently adjusting.

For example, assume the first device is a gas stove while the second device is a range hood. Then if the user needs to use the gas stove to cook, when the gas stove is turned on, the first client corresponding to the gas stove would simultaneously receive the state change information of the gas stove, and further generate the running parameter information based on the state change information and send the running parameter information to the server. Then the server would analyze the received running parameter information to obtain the state change information and further acquire the scene data corresponding to the state change information. The server would then analyze the scene data to obtain the identification information of the second device corresponding to the scene data, the second client corresponding to the second device, as well as the parameter change information, namely the identification information of the range hood and the second client corresponding to the range hood as well as the parameter change information for starting. Thereafter, the server would send the parameter change information to the second client, and in response to receiving the parameter change information, the second client would control the range hood to start up. Thereby, the linked control between the devices of different companies is achieved. Of course, the above method can also be applied to other scenarios. For example, when the user turns on the television in the living room, the air conditioner in the living room can be automatically turned on. As another example, when the user turns on the television in the bedroom, the air conditioner in the bedroom can be automatically turned on. As still another example, when the user turns off the light in the bedroom, the air conditioner in the bedroom can be adjusted to sleep mode, etc., thereby greatly improving the user experience.

According to the server provided by this embodiment, in response to receiving the running parameter information sent by a first client, the analysis module 10 analyzes the running parameter information to obtain state change information. Then the acquisition module 20 acquires the scene data corresponding to the state change information and further analyzes the scene data to obtain identification information of a second device corresponding to the scene data, a second client corresponding to the second device, and parameter change information. Then the transmission module 30 sends the parameter change information to the second client so that the second client controls the second device based on the parameter change information. This makes it possible to control the corresponding second device by way of the running parameter information, enabling linked control between devices of different manufacturers. Therefore, the user would be able to control the devices of other manufacturers by way of an application of a certain device, realizing the linkage of various devices in an intelligent scenario without changing the hardware and communication protocols of these devices, which greatly enhances the experience of smart home.

A second embodiment of the server in accordance with the present disclosure is provided on the basis of the first embodiment, as illustrated in FIG. 2. In this embodiment, the server further includes a creation module 40 and an addition module 50.

The creation module 40 is configured to create an aidl file in a specified directory, and reconstruct an onBind method by customizing a class MySceneSevice.

In this embodiment, the creation module 40 may automatically create an IScene.java file named IScene.aidl in the same directory as the directory of the R file under the root directory. That is, the specified directory is the directory of the R file under the root directory of the server. The creation module 40 may then define a class MySceneSevice that inherits from Service, and reconstruct the onBind method based on the class MySceneSevice, so that the objects (arguments) of the two methods in IScene.Stub() can be returned to the client by way of the onBind(Intent intent) method. The definition of the IScene.aidl method is as follows:
String updateData();
Void changeMessage(String message).

The addition module 50 is configured to add respective start functions of applications of clients in a manifest file.

In this embodiment, the addition module 50 may first register a service class in the manifest file and at the same time add the respective start functions (i.e., specific start actions) of the applications of various clients, so that the clients will be bound to this server thus enabling the server to start the applications of these clients. Each client that communicates with the server needs to copy the IScene.aidl file to the same directory as the server's IScene.aidl file, and then bind the server application by calling the bindService(intent, connect, Service.BIND_AUTO_CREATE) method, and obtain the IBinder object provided by the server.

According to the server provided in this embodiment, an the creation module 40 creates an aidl file in a specified directory, and reconstructs an onBind method by customizing a class MySceneSevice, and then the addition module 50 adds the respective start functions of the applications of the clients in a manifest file. This enables the server to automatically start the applications of various clients to facilitate the communication with the clients, whereby the clients can control the corresponding devices facilitating the linked control of various devices found in an intelligent scenario.

A third embodiment of the server in accordance with the present disclosure is provided on the basis of the first embodiment, as illustrated in FIG. 3. In this embodiment, the transmission module 30 includes a first transmission unit 21 and a second transmission unit 22.

The first transmission unit 21 is configured to send a start instruction to the second client, such that the second client, in response to receiving the start instruction, starts an application corresponding to the parameter change information, and returns operating state information of the application to the server.

Generally, the application of the second device in the second client stays in a closed state to reduce the power consumption of the second terminal. Therefore, the first transmission unit 21 may first determine whether the application of the second device is in a running state. When the application of the second device is not running, then a start instruction would be transmitted to the second client. Then in response to receiving the start instruction, the second client would activate the application corresponding to the parameter change information.

In this embodiment, the start instruction can be directly sent to the second client, so that when the application corresponding to the parameter change information is not running, the second client would activate the application corresponding to the parameter change information according to this start instruction and further send the operating state information of the application to the server. Then when the application corresponding to the parameter change information is in the running state, the second client would send the operating state information of the application to the server, where the operating state information refers to the operating state information when the application is in the running state. After the application is activated, the second client is then connected to the server via this application so as to establish a communication connection between the second client and the server and further notify the server that the application is already running.

The second transmission unit 32 is configured to send the parameter change information to the second client in response to receiving the operating state information, allowing the second client to control the second device through the application based on the parameter change information.

In this embodiment, at the time of receiving the operating state information, the application of the second client has already been started and the communication connection between the second client and the server has been successfully established. Thus, the second transmission unit 32 can send the parameter change information to the second client, which then can control the second device via this application based on the parameter change information. When the communication connection is being set up between the second client and the server, the second client obtains the association data, that is, the parameter change information, transmitted by the server through the updateData()method of the IBinder object acquired from the server.

According to the server provided by this embodiment, the first transmission unit 21 sends a start instruction to the second client, so that the second client starts the application corresponding to the parameter change information in response to receiving the start instruction, and further returns the operating state information of the application to the server. Then when receiving the operating state information, the second transmission unit 32 sends the parameter change information to the second client, which thus controls the second device via the application based on the parameter change information, thereby ensuring that the application of the second client is in an operating state. Thus, the second client can control the second device through the application, thereby realizing linked control between devices of different manufacturers, enabling the user to control devices of other manufacturers through the application of a certain device.

The foregoing description merely portrays some exemplary embodiments according to this disclosure and is not intended to limit the patentable scope of this disclosure. Any equivalent structural or equivalent flow transformations that are made taking advantage of the present specification and the accompanying drawings and any direct or indirect applications of the present disclosure in other related technical fields shall all fall in the patentable scope of protection of this disclosure.

## Claims

1. A multi-device intelligent control method, comprising:
in response to receiving running parameter information sent by a first client, analyzing, by a server, the running parameter information to obtain state change information, wherein when a state of a first device corresponding to the first client changes, the first client generates the running parameter information based on the state change information of the first device and sends the running parameter information to the server;
acquiring scene data corresponding to the state change information, and analyzing the scene data to obtain identification information of a second device corresponding to the scene data, a second client corresponding to the second device, and corresponding parameter change information of the second device; and
sending the parameter change information to the second client, allowing the second client to control the second device based on the parameter change information.

2. The multi-device intelligent control method as recited in claim 1, wherein the running parameter information comprises current state information of the first device, and changed data information of the first device when the state of the first device changes.

3. The multi-device intelligent control method as recited in claim 1, wherein the operation of acquiring scene data corresponding to the state change information comprises:
sending the state change information to a cloud server by the server, allowing the cloud server to search in a scene database for the scene data corresponding to the state change information, and transmit the found scene data to the server.

4. The multi-device intelligent control method as recited in claim 3, wherein the running parameter information comprises current state information of the first device, and changed data information of the first device when the state of the first device changes.

5. The multi-device intelligent control method as recited in claim 1, further comprising the following operations prior to the operation of "in response to receiving running parameter information sent by a first client, analyzing, by a server, the running parameter information to obtain state change information":
creating an aidl file in a specified directory, and reconstructing an onBind method by customizing a class MySceneSevice; and
adding respective start functions of applications of clients in a manifest file.

6. The multi-device intelligent control method as recited in claim 5, wherein the running parameter information comprises current state information of the first device, and changed data information of the first device when the state of the first device changes.

7. The multi-device intelligent control method as recited in claim 5, wherein the operation of "sending the parameter change information to the second client, allowing the second client to control the second device based on the parameter change information" comprises:
sending a start instruction to the second client, allowing the second client to start an application corresponding to the parameter change information in response to receiving the start instruction, and to return operating state information of the application to the server; and
in response to receiving the operating state information, sending the parameter change information to the second client, allowing the second client to control the second device through the application based on the parameter change information.

8. The multi-device intelligent control method as recited in claim 7, wherein the running parameter information comprises current state information of the first device, and changed data information of the first device when the state of the first device changes.

9. A server, comprising:
an analysis module, configured to, in response to receiving running parameter information sent by a first client, analyze the running parameter information to obtain state change information, wherein when a state of a first device corresponding to the first client changes, the first client generates the running parameter information based on the state change information of the first device and sends the running parameter information to the server;
an acquisition module, configured to acquire scene data corresponding to the state change information, and analyze the scene data to obtain identification information of a second device corresponding to the scene data, a second client corresponding to the second device, and corresponding parameter change information of the second device; and
a transmission module, configured to send the parameter change information to the second client, allowing the second client to control the second device based on the parameter change information.

10. The server as recited in claim 9, wherein the running parameter information comprises current state information of the first device, and changed data information of the first device when the state of the first device changes.

11. The server as recited in claim 9, wherein the acquisition module is further configured to send the state change information to a cloud server, allowing the cloud server to search in a scene database for the scene data corresponding to the state change information and transmit the acquired scene data to the server.

12. The server as recited in claim 11, wherein the running parameter information comprises current state information of the first device, and changed data information of the first device when the state of the first device changes.

13. The server as recited in claim 9, further comprising:
a creation module, configured to create an aidl file in a specified directory, and reconstruct an onBind method by customizing a class MySceneSevice; and
an addition module, configured to add respective start functions of applications of clients in a manifest file.

14. The server as recited in claim 13, wherein the transmission module comprises:
a first transmission unit, configured to send a start instruction to the second client, allowing the second client to start an application corresponding to the parameter change information in response to receiving the start instruction, and to return operating state information of the application to the server; and
a second transmission unit, configured to send the parameter change information to the second client in response to receiving the operating state information, allowing the second client to control the second device through the application based on the parameter change information.

15. The server as recited in claim 14, wherein the running parameter information comprises current state information of the first device, and changed data information of the first device when the state of the first device changes.
